# EUROPEAN PATENT APPLICATION

(11) **EP 1 439 444 A1**
(43) Date of publication of application: **21.07.2004**
(21) Application number: 03392001.8
(22) Date of filing: 16.01.2003
(51) Int. Cl.: G05F 1/575

(54) **Low drop out voltage regulator having a cascode structure**

(71) Applicant: Dialog Semiconductor GmbH, 73230 Kirchheim/Teck-Nabern (DE)
(72) Inventor: Eberlein, Matthias, 82205 Gilching (DE)
(74) Representative: Schuffenecker, Thierry

(57) **Abstract**

A method and a circuit to achieve a low dropout voltage regulator having a constant high performance under all operating conditions, including the dropout region, have been accomplished. A regulated cascade structure is placed at the input of a current mirror and in connection with a voltage regulator output stage. In contrast to other applications the positive input of the error amplifier is not biased with a reference voltage but connected to the regulator output. Therefore the cascade structure regulates the voltage of the entry node of the current mirror to be equal to the output voltage of the regulator under all operating conditions of the regulator. Thus the transistors of the current mirror have always identical drain-source voltages. Therefore the regulator is kept in the optimal, balanced operating point, a constant high regulator loop gain is achieved and PSRR and load regulation performance is no more reduced under dropout operating conditions.

## Description

### Technical field

This invention relates generally to voltage regulators, and more particularly to a low dropout voltage regulator having a regulated cascade structure with an error amplifier as a part of a current mirror output stage.

### Background art

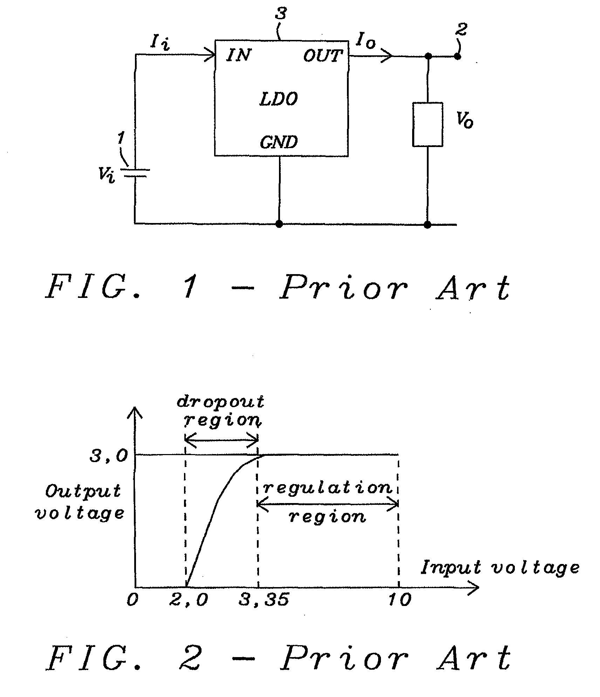

Low-dropout (LDO) linear regulators are commonly used to provide power to low-voltage digital circuits, where point-of-load regulation is important. Fig. 1 **prior art** shows a typical basic circuit of a LDO regulator **3** having an input voltage Vᵢ **1,** an output voltage Vₒ **2,** an input current lᵢ and an output current lₒ.

**Fig. 2 prior art** shows typical input/output characteristics of a typical LDO regulator.
The output voltage is regulated to e.g. 3.0 volts. The regulation region, having a good performance, could be between an input voltage of 10 V and an input voltage of e.g. 3.35 volts. The dropout voltage is the input-to-output differential voltage at which the circuit ceases to regulate against further reductions in input voltage; this point occurs when the input voltage approaches the output voltage. The dropout voltage is typically in the order of magnitude of 350 mV. In the example shown the range of the dropout region is between approximately 2.0 volts and 3.35 volts. Thus, the LDO regulator begins dropping out at 3.35 volts input voltage. In the dropout region the output pass element is simply a resistor. Below the dropout region the device is non-functional. Low dropout voltage is necessary to maximize the regulator efficiency.

In prior art LDOs having a PMOS current mirror at its output are available. They have the advantage of a current consumption scaling linearly with delivered load current that results in constant effectivity, even for small load current.

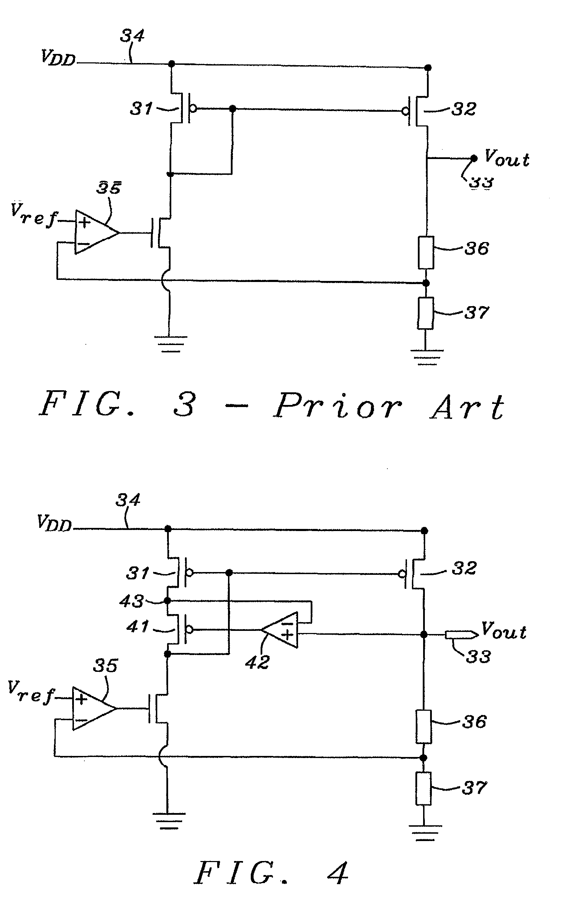

Fig. 3 prior art shows a basic schematic of a circuit of a LDO with a current mirror at the output. Transistors **31** and **32** operate as a current mirror. Furthermore said LDO is comprising a supply voltage V_{dd} **34,** an output voltage Vₒᵤₜ **33,** a voltage divider comprising the resistors **36** and **37** and an amplifier **35.** Said LDO is problematic while operating in the dropout region, that means, if the supply voltage V_{DD} **34** is only a few hundred millivolts above the output voltage Vₒᵤₜ **33.** Then transistor **32** operates in triode region. The current mirror is no longer symmetrical and this results in reduced loop gain, unbalanced amplifier **35** operating condition, poor load regulation and also PSSR degradation if the output pass enters the linear region.

Said performance degradation of LDOs is a challenge to the designers of voltage regulators.

Eduard Saeckinger et al.( IEEE Journal of Solid-State Circuits, Vol. 25, no.1, February 1990, p. 289-298) presents a simple cascode circuit with the gate voltage of the cascode transistor being controlled by a feedback amplifier, and thus named a "regulated cascode". In comparison to the standard cascode circuit, the minimum output voltage is lower by about 30 to 60 percent while the output conductance and the feedback capacitance are lower by about 100 times. An analytical large-signal, small signal, and noise analysis is carried out. Some applications like current mirrors and voltage amplifiers are discussed.

There are some patents in the field of LDO's using current mirrors:
U. S. Patent (6,304,131 to Huggins et al) describes a high power supply ripple rejection internally compensated low dropout voltage regulator using an output PMOS pass device. The voltage regulator uses an intermediate amplifier stage configured from a common source and a current mirror loaded PMOS device to replace the more conventional source follower impedance buffer associated with conventional Miller compensation techniques. Compensation is achieved through use of a small internal capacitor that provides a very low frequency dominant pole at the output of the input stage while pushing out the two other poles at the outputs of the second and third gain stages to a frequency well outside of the unity gain frequency to ensure closed loop stability. High, wide bandwidth PSRR is achieved through an integrated circuit implementation of three voltage gain stages compensated by a nested active Miller compensation technique that does not impedance shunt the output series PMOS pass device
U. S. Patent (6,188,211 to Rincon-Mora et al.) discloses a low drop-out (LDO) voltage regulator and a system including the same. An error amplifier controls the gate voltage of a source follower transistor in response to the difference between a feedback voltage from the output and a reference voltage. The source of the source follower transistor is connected to the gates of an output transistor, which drives the output from the input voltage in response to the source follower transistor. A current mirror transistor has its gate also connected to the gate of the output transistor, and mirrors the output current at a much-reduced ratio. The mirror current is conducted through a network of transistors, and controls the conduction of a first feedback transistor and a second feedback transistor that are each connected to the source of the source follower transistor and in parallel with a weak current source. The response of the first feedback transistor is slowed by a resistor and capacitor, while the second feedback transistor is not delayed. As such, the second feedback transistor assists transient response, particularly in discharging the gate capacitance of the output transistor, while the first feedback transistor partially cancels load regulation effects.
   U. S. Patent (5,867,015 to Corsi et al.) discloses a voltage regulator circuit including a first MOS transistor coupled between a voltage supply line and an output node, said MOS transistor providing a stable voltage on a output node, a source follower coupled to a gate of said MOS transistor, an amplifier coupled to a gate of the source follower for controlling the response of said MOS transistor, a negative feedback circuitry coupled between the output node and an amplifier, said feedback circuitry providing feedback to said amplifier, a current conveyer coupled to said MOS transistor, and positive feedback circuitry coupled between the current conveyer and the source follower.

### Summary of the invention

A principal object of the present invention is to provide a circuit and a method for a low drop-out (LDO) voltage regulator having no performance degradation while operating in the dropout region.

A further object of the present invention is to achieve a circuit and a method for a low drop-out (LDO) voltage regulator having an optimal and balanced operating point under all operating conditions.

Another further object of the present invention is to achieve a circuit and a method for a low dropout voltage regulator having a constant high regulator loop gain under all operating conditions.

Another further object of the present invention is to achieve a circuit and a method for a low dropout voltage regulator having PSRR and load regulation performance no more reduced under dropout conditions.

In accordance with the objects of this invention a circuit to achieve a low drop-out (LDO) voltage regulator having a high performance in all operating conditions including the dropout region has been accomplished. Said circuit comprises, first, an amplifier having an input and an output wherein the input is a reference voltage and the voltage at a voltage divider between ground and the drain of an output transistor and the output to the gate of a transistor, a transistor at the output of said amplifier being connected to the output of said amplifier, to ground, to a regulated cascode and to the gates of a current mirror and a voltage divider hooked up between ground and the drain of a output transistor of a current mirror. Furthermore said circuit comprises a current mirror having an input and an output wherein the input is connected to a regulated cascode and the output is the output of said LDO, a regulated cascode structure regulating the entry voltage of said current mirror to be equal to the output voltage of said LDO, and a supply voltage.

In accordance with further objects of the invention a method to achieve a high performance of a low drop-out (LDO) voltage regulator in all operating conditions including the dropout region has been accomplished. Said method comprises, first, providing an amplifier, a transistor at the output of said amplifier, a voltage divider, a current mirror, a regulated cascode structure, and a supply voltage. The first steps of said method comprise to sense the output voltage with the positive input of said cascode structure, to sense the entry voltage of said current mirror with the negative input of said cascode structure and to place said regulated cascode at the input of said current mirror. The next steps comprise to regulate the input voltage of said current mirror to be equal to said output voltage under all operating conditions, to keep said current mirror in matched operating point, to keep constant high regulator loop gain and to and keep PSRR and load regulation gain high under all operating conditions.

### Description of the drawings

In the accompanying drawings forming a material part of this description, there is shown:
Fig. 1 prior art illustrates the principal currents of an LDO.
Fig. 2 prior art shows the input/output characteristics of a typical LDO.
Fig. 3 prior art shows a basic schematic of a circuit of a LDO.
Fig. 4 shows a basic schematic of the circuit invented
Fig. 5 shows a method how a high performance of a LDO is achieved under all operation conditions.

### Description of the preferred embodiments

The preferred embodiments disclose a circuit and a method for a low drop-out (LDO) voltage regulator overcoming performance degradation while the LDO is operating in the dropout region as described in the prior art section.

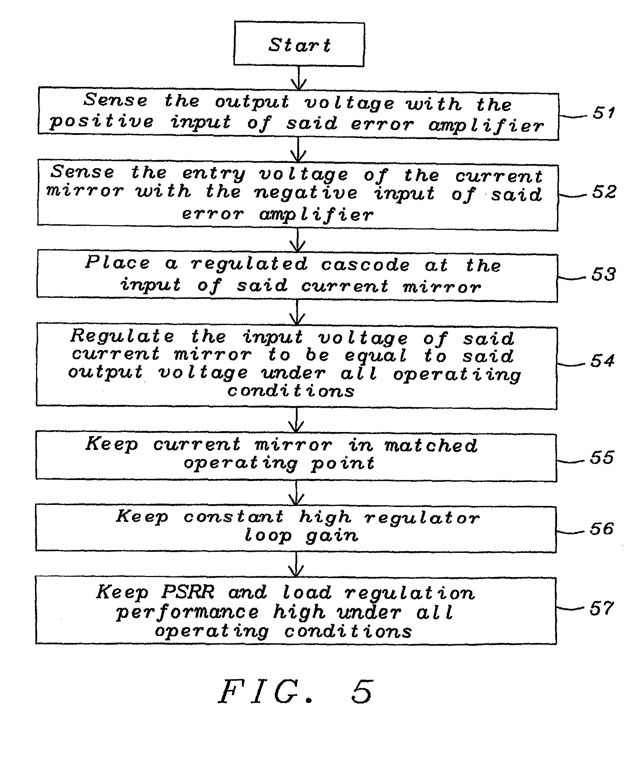

**Fig. 4** shows the basic architecture of the circuit invented. The LDO circuit has, similar to the circuit shown in prior art, a PMOS current mirror at its output comprising transistors **31** and **32,** a supply voltage V_{dd} **34,** an output voltage **33,** an voltage divider comprising resistors **36** and **37** and an amplifier **35.** The invention introduces a regulated cascode at the input of the PMOS current mirror to overcome the described performance degradation while operating in the dropout region. The cascode transistor **41** is operating together with error amplifier **42**.

The regulated cascode as such is a well known structure as described by Saeckinger et al., cited in more detail in the prior art section. Said regulated cascode is used in prior art to boost the output impedance of a current source or mirror. In the circuit invented said regulated cascode is placed at the input of a current mirror and in connection with a voltage regulator output stage. In contrast to other applications of a regulated cascode the positive input of the error amplifier **42** is not biased with a reference voltage but connected to the regulator output voltage Vout **33.** Thus the cascode structure regulates node 43, located at the input of the current mirror **31/32**, to follow the output voltage Vₒᵤₜ **33** under all operating conditions of the regulator, including the dropout region of the LDO.

As a result both transistors **31/32** of the current mirror have always identical drain-source voltages providing the following advantages:
1. During dropout condition both transistors **31/32** of the current mirror work in triode region and the current mirror is no longer unmatched. Thus the voltage regulator is kept in the optimal, balanced operating point.
2. The drop of total gain caused by the *g*_{*m*} of transistor **32** under dropout condition is compensated by the matched transconductance of transistor 31.Operating together with said regulated cascode the current mirror input actually operates as a gain boost for a degraded current mirror output. Thus a constant high regulator loop gain is achieved.
3. PSRR and load regulation is no more reduced under all operating conditions, including dropout operating conditions.

It is obvious, that alternatively other types of transistors can be used for the current mirror described, as e.g. NMOS transistors, or bipolar PNP transistor and also bipolar NPN transistors if a regulator with a negative output voltage is constructed.

**Fig. 5** describes a method, providing above-mentioned circuit, how to achieve optimal performance of a LDO under all operating conditions including the dropout region. In step **51** the output voltage of said LDO is sensed with the positive input of said error amplifier. In step **52** the entry voltage of said current mirror is sensed with the negative input of said error amplifier. In step 53 a regulated cascode is placed at the input of said current mirror. Step 54 describes the regulation of the input voltage of said current mirror to be equal to said output voltage under all operating conditions. Said regulation leads to keeping the current mirror in matched operating point in step **55**, to keeping a constant high regulator loop gain in step **56** and to keep PSRR and load regulation performance high under all operating conditions in step **57**.

While the invention has been particularly shown and described with reference to the preferred embodiments thereof, it will be understood by those skilled in the art that various changes in form and details may be made without departing from the spirit and scope of the invention.

## Claims

1. A circuit to achieve a low drop-out (LDO) voltage regulator having a high performance in all operating conditions including the dropout region comprising:
- an amplifier having an input and an output wherein the input is a reference voltage and the voltage at a voltage divider between ground and the drain of an output transistor and the output to the gate of a transistor;
- a transistor at the output of said amplifier being connected to the output of said amplifier, to ground, to a regulated cascode and to the gates of a current mirror;
- a voltage divider hooked up between ground and the drain of an output transistor of a current mirror;
- a current mirror having an input and an output wherein the input is connected to a regulated cascode and the output is the output of said LDO;
- a regulated cascode structure regulating the entry voltage of said current mirror to be equal to the output voltage of said LDO; and
- a supply voltage.

2. The circuit of claim 1 wherein said voltage divider is a string of two resistors.

3. The circuit of claim 1 wherein said regulated cascode structure is comprising:
- a cascode transistor; and
- an error amplifier stage having an input and an output wherein the input is the output voltage of said LDO and the voltage at the entry of said current mirror and the output is to said cascode transistor.

4. The circuit of claim 1 wherein PMOS transistors or NMOS transistors are used for the current mirror

5. The circuit of claim 4 wherein said current mirror is comprising a MOS transistor with bulk contact.

6. The circuit of claim 5 wherein the source of said MOS-transistor used as a current mirror is connected to the source of the output transistor, the gates of both said transistors are interconnected and the output of said input transistor is connected to the drain of the transistor used as current mirror and to the gates of both said transistors.

7. The circuit of claim 1 wherein PNP transistors or NPN transistors are used for said current mirror.

8. A method to achieve a high performance of a low drop-out (LDO) voltage regulator in all operating conditions including the dropout region comprising:
- providing an amplifier, a transistor at the output of said amplifier, a voltage divider, a current mirror, a regulated cascode structure, and a supply voltage;
- sense the output voltage with the positive input of said cascode structure;
- sense the entry voltage of said current mirror with the negative input of said cascode structure;
- place said regulated cascode at the input of said current mirror;
- regulate the input voltage of said current mirror to be equal to said output voltage under all operating conditions;
- keep current mirror in matched operating point;
- keep constant high regulator loop gain; and keep PSRR and load regulation gain high under all operating conditions.

9. The method of claim 8 wherein said voltage divider is a string of two resistors.

10. The method of claim 8 wherein said regulated cascode structure is comprising:
- a cascode transistor; and
- an error amplifier stage having an input and an output wherein the input is the output voltage of said LDO and the voltage at the entry of said current mirror and the output is to said cascode transistor.

11. The method of claim 8 wherein PMOS transistors or NMOS transistors are used for the current mirror.

12. The method of claim 8 wherein PNP transistors or NPN transistors are used for said current mirror.
